# EUROPÄISCHE PATENTSCHRIFT

(11) **EP 2 601 481 B1**
(45) Veröffentlichungstag und Bekanntmachung des Hinweises auf die Patenterteilung: **10.05.2017**
(21) Anmeldenummer: 11749364.3
(22) Anmeldetag: 22.07.2011
(51) Int. Cl.: G01C 21/36, G08G 1/14, B62D 15/02, B60W 30/06

(54) **VERFAHREN ZUR UNTERSTÜTZUNG EINES EINPARKVORGANGS IN EINEM PARKHAUS, EINPARKSYSTEM FÜR EIN FAHRZEUG UND BELEGUNGSZUSTANDSERKENNUNGSSYSTEM FÜR EIN PARKHAUS**
METHOD FOR SUPPORTING A PARKING PROCESS IN A PARKING GARAGE, PARKING SYSTEM FOR A VEHICLE AND OCCUPANCY DETECTION SYSTEM FOR A PARKING GARAGE
MÉTHODE POUR L'ASSISTANCE D' UNE MANOEUVRE DE STATIONNEMENT DANS UN PARC DE STATIONNEMENT, SYSTÈME DE STATIONNEMENT POUR UN VÉHICULE ET SYSTÈME DE DÉTECTION D'ÉTAT D'OCCUPATION POUR UN PARC DE STATIONNEMENT

(30) Priorität: 03.08.2010 DE 102010033215
(43) Veröffentlichungstag der Anmeldung: 12.06.2013
(73) Patentinhaber: Valeo Schalter und Sensoren GmbH, 74321 Bietigheim-Bissingen (DE)
(72) Erfinder: GRIMM, Oliver, 74223 Flein (DE); JECKER, Nicolas, 73730 Esslingen (DE); SCHULER, Thomas, 75446 Wiernsheim (DE)
(74) Vertreter: Pothmann, Karsten
(86) Internationale Anmeldenummer: PCT/EP2011/062654
(87) Internationale Veröffentlichungsnummer: WO 2012/019899

(56) Entgegenhaltungen:
- EP-A2- 1 006 503
- DE-A1-102004 032 346
- DE-A1-102009 021 014
- US-A1- 2008 165 030
- US-A1- 2009 289 813
- US-A1- 2010 156 672

## Beschreibung

Die Erfindung betrifft ein Verfahren zur Unterstützung eines Einparkvorgangs in einem Parkhaus der im Oberbegriff des Anspruchs 1 genannten Art, sowie ein zugehöriges Einparksystem für ein Fahrzeug

Aus dem Stand der Technik sind Einparksysteme für Fahrzeuge bekannt, welche Parklücken mit Hilfe von Abstandssensoren vermessen und die am Straßenrand gemessenen Parklücken über eine drahtlose Kommunikation an eine zentrale Datenbank übertragen. Solche Systeme helfen aber nicht in Parkhäusern, auch wenn die Anzahl der freien Parkplätze in der Tafel angezeigt wird, da die freien Parkplätze geographisch nicht lokalisiert sind.

In der Offenlegungsschrift DE 10 2007 030 430 A1 werden beispielsweise ein Verfahren und eine Vorrichtung zur Übertragung von fahrzeugrelevanten Informationen im und aus einem Fahrzeug beschrieben. Bei den beschriebenen Ausführungsformen werden mittels Kommunikationsmitteln fahrzeugrelevante Informationen empfangen und gesendet und mittels Empfangsmitteln zur Ortsbestimmung werden Ortinformationen empfangen. Des Weiteren werden die fahrzeugrelevanten Informationen und Ortinformationen über Mittel zur Koordinierung der Interaktion ausgewertet und fahrzeugrelevante Informationen und die Ortinformationen mittels einer drahtlosen Funkvernetzung an im Fahrzeug mitgeführte mobile Endgeräte in der Art übertragen, dass die fahrzeugrelevanten Informationen und Ortinformationen innerhalb einer Wiedergabeeinheit der mobilen Endgeräte akustisch und/oder optisch und/oder haptisch angezeigt und interagiert werden, wobei die drahtlose Funkvernetzung mindestens eine bidirektionale Kommunikationsverbindung umfasst.

In der Druckschrift WO 00/29811 wird eine Multimedia-Navigation beschrieben. Es wird ein Informationsträger vorgeschlagen, der multimediale Informationen über Objekte am Reiseweg oder Reiseziel für die Verwendung in einer Navigationseinrichtung bereitstellt. Dabei kann die Darstellung in Abhängigkeit von der Position des Fahrzeugs auch automatisch erfolgen und durch Informationen ergänzt werden, welche über Funk von einer Dienstezentrale abrufbar sind.

Die US 2010/156672 A1 offenbart ein automatisches Einparksystem, bei dem ein zentraler Server Navigationspfade für die einzuparkenden Fahrzeuge bereitstellt.

Aufgabe der Erfindung ist es, ein Verfahren zur Unterstützung eines Einparkvorgangs in einem Parkhaus der im Oberbegriff des Anspruchs 1 genannten Art und ein korrespondierendes Einparksystem für ein Fahrzeug der im Oberbegriff des Anspruchs 8 genannten Art dahingehend weiterzuentwickeln, dass das Auffinden von freien Parkplätzen in einem Parkhaus vereinfacht und beschleunigt werden kann.

Diese Aufgabe wird erfindungsgemäß durch ein Verfahren zur Unterstützung eines Einparkvorgangs in einem Parkhaus mit den Merkmalen des Anspruchs 1 sowie durch ein Einparksystem für ein Fahrzeug mit den Merkmalen des Anspruchs 8 gelöst. Weitere die Ausführungsformen der Erfindung in vorteilhafter Weise ausgestaltende Merkmale enthalten die Unteransprüche.

Der mit der Erfindung erzielte Vorteil besteht darin, dass durch die Informationsübertragung nur richtige Parkplätze und deren Belegungszustand erkannt werden, so dass schneller und einfacher ein freier Parkplatz gefunden und eingeparkt werden kann. Alle nicht relevanten Ecken, Sperrflächen und Objekte werden nicht bei der Parklückenbegrenzung bzw. bei der Belegungsermittlung der Parkplätze berücksichtigt. Dadurch können alle vorhandenen Parkplätze genutzt werden, so dass eine höhere Rentabilität vorhanden ist und der Einparkkomfort für den Fahrer erhöht wird, insbesondere dann, wenn die empfangenen Informationen über das Parkhaus genutzt werden, um das Fahrzeug automatisch durch das Parkhaus zu einem freien Parkplatz zu lenken und wahlweise dem Fahrer entsprechende Navigationshinweise auszugeben.

Der Grundgedanke der Erfindung basiert darauf, dass einem Einparksystem im Fahrzeug Informationen über das Parkhaus zur Verfügung gestellt werden, mit welchen das Fahrzeug durch das Parkhaus geleitet werden kann.

Ein erfindungsgemäßes Verfahren zur Unterstützung eines Einparkvorgangs in einem Parkhaus unter Verwendung eines Einparksystems in einem Fahrzeug stellt dem Einparksystem bei der Einfahrt und/oder während des Aufenthalts im Parkhaus Informationen über das Parkhaus bereit, wobei das Einparksystem durch Auswerten der bereitgestellten Informationen über das Parkhaus Steuerdaten für das Fahrzeug erzeugt und ausgibt, wobei das Fahrzeug basierend auf den Steuerdaten automatisch durch das Parkhaus bewegt wird und wahlweise die Steuerdaten als Navigationshinweise an den Fahrer ausgegeben werden.

Ein erfindungsgemäßes Einparksystem für ein Fahrzeug umfasst eine Auswerte- und Steuereinheit und eine Abstandssensorik. Erfindungsgemäß empfängt die Auswerte- und Steuereinheit über eine Sende-Empfangs-Einheit bei der Einfahrt und/oder während des Aufenthalts im Parkhaus Informationen über das Parkhaus und speichert diese ab. Durch Auswerten der bereitgestellten Informationen über das Parkhaus erzeugt die Auswerte- und Steuereinheit Steuerdaten für das Fahrzeug und gibt diese aus, wobei das Fahrzeug basierend auf den Steuerdaten automatisch durch das Parkhaus bewegbar ist und wahlweise die Steuerdaten als Navigationshinweise an den Fahrer ausgebbar sind.

Ein vorteilhaftes Belegungszustandserkennungssystem für ein Parkhaus umfasst eine Auswerte- und Steuereinheit, welche von einer im Parkhaus angeordneten Belegungszustandssensorik und/oder über eine Sende-Empfangs-Einheit von Fahrzeugen Informationen über den Belegungszustand der einzelnen Parkplätze im Parkhaus empfängt und in einer Datenbank mit Geometriedaten des Parkhauses speichert, wobei die Auswerte- und Steuereinheit Informationen über den Belegungszustand der einzelnen Parkplätze und die Geometriedaten bei Bedarf über die Sende-Empfangs-Einheit an Fahrzeuge mit einem Einparksystem ausgibt und/oder die Datenbank mit den gespeicherten Informationen über den Belegungszustand der einzelnen Parkplätze aktualisiert, wenn neue Informationen über den Belegungszustand der einzelnen Parkplätze empfangen werden.

Ausführungsformen der vorliegenden Erfindung verwenden Geometriedaten des Parkhauses und weitere Fahreigenschaften, wie beispielsweise Einbahnstraßen, Fahrrichtung, Parkplatzgeometrien, Pfosten usw., um den Einparkvorgang im Parkhaus zu unterstützen. Falls Einrichtungen im Parkhaus selbst die freien Parkplätze erkennen können, dann können diese Informationen auch vom Einparksystem im Fahrzeug eingelesen werden. Falls im Parkhaus keine solchen Einrichtungen vorhanden sind, dann können Einparksysteme in den Fahrzeugen den Belegungszustand der einzelnen Parkplätze beim Vorbeifahren nach Plausibilisierung mit den geometrischen Daten des Parkhauses ermitteln und ausgeben. Die im Parkhaus geführte Datenbank kann dadurch entsprechend aktualisiert werden. Durch diesen gegenseitigen Informationsaustausch werden in vorteilhafter Weise nur richtige Parkplätze erkannt, so dass schneller eingeparkt werden kann. In vorteilhafter Ausgestaltung des erfindungsgemäßen Verfahrens umfassen die Informationen über das Parkhaus Geometriedaten des Parkhauses und/oder Informationen über den Belegungszustand der einzelnen Parkplätze. Die Geometriedaten des Parkhauses umfassen erfindungsgemäß Positionsinformationen und/oder Abmessungsinformationen von Wänden und/oder Sperrflächen und/oder Pfeilern und/oder wahlweise Parkplätzen und/oder Fahrkorridoren mit Fahrtrichtungen. Die Informationen über den Belegungszustand der einzelnen Parkplätze umfassen beispielsweise eine Belegt-Information und/oder eine Frei-Information und/oder eine unbekannte Belegungsinformation.

In weiterer vorteilhafter Ausgestaltung des erfindungsgemäßen Verfahrens erkennt das Einparksystem im Fahrzeug während der Fahrt durch das Parkhaus durch Korrelation mit den empfangenen Informationen über das Parkhaus Parkplätze und ermittelt und speichert deren Belegungszustand basierend auf erfassten Abstandsdaten.

In weiterer vorteilhafter Ausgestaltung des erfindungsgemäßen Verfahrens wird der Belegungszustand der einzelnen Parkplätze durch Auswerten von Informationen aktualisiert, welche von einer im Parkhaus angeordneten Belegungszustandssensorik und/oder von mindestens einem Fahrzeug bereitgestellt werden, welches ein Einparksystem aufweist.

In vorteilhafter Ausgestaltung des erfindungsgemäßen Einparksystems erkennt die Auswerte- und Steuereinheit während der Fahrt durch das Parkhaus durch Korrelation mit den empfangenen Informationen über das Parkhaus Parkplätze und ermittelt und speichert deren Belegungszustand basierend auf Abstandsdaten, welche durch die Abstandssensorik erfassbar sind.

In weiterer vorteilhafter Ausgestaltung des erfindungsgemäßen Einparksystems aktualisiert die Auswerte- und Steuereinheit den gespeicherten Belegungszustand der einzelnen Parkplätze bei Bedarf mit dem ermittelten Belegungszustand.

Nachfolgend wird ein Ausführungsbeispiel der Erfindung anhand einer zeichnerischen Darstellung näher erläutert.

In der Darstellung zeigt:
- Fig. 1: ein schematisches Blockdiagramm von Einrichtungen in einem Parkhaus und von einem Einparksystem in einem Fahrzeug, gemäß Ausführungsformen der vorliegenden Erfindung.
- Fig. 2: eine schematische Darstellung eines Parkhausabschnittes mit einem Fahrzeug, das ein erfindungsgemäßes Einparksystem aufweist.
- Fig. 3: eine schematische Darstellung der in einer Datenbank gespeicherten Informationen über das Parkhaus, gemäß einem Ausführungsbeispiel der vorliegenden Erfindung.

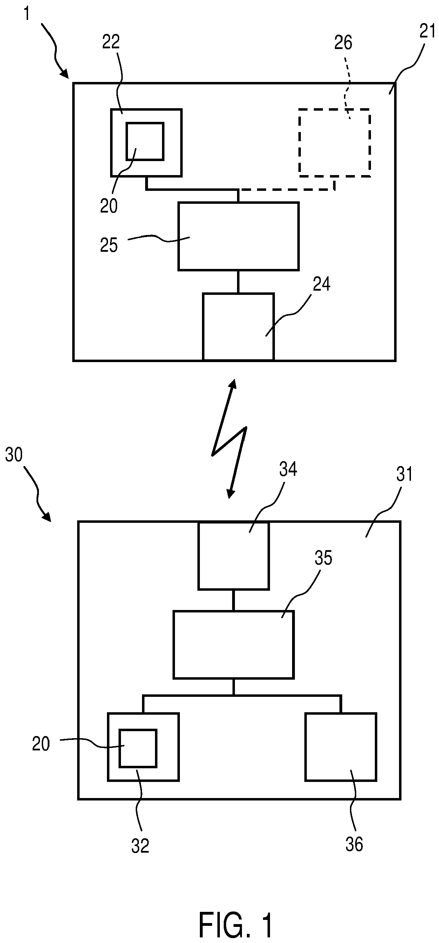

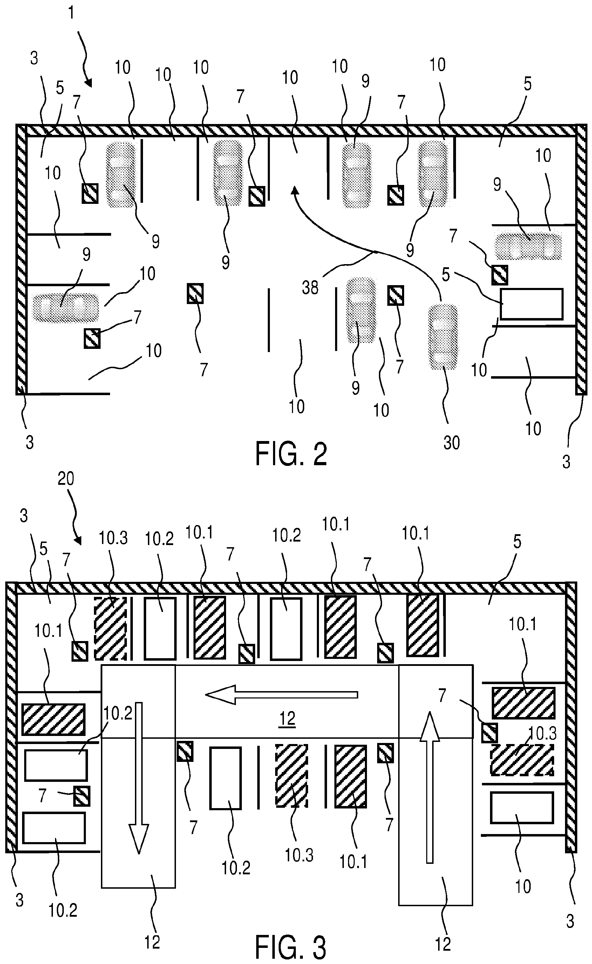

Wie aus Fig. 1 und 2 ersichtlich ist, umfasst ein Ausführungsbeispiel eines Belegungszustandserkennungssystems 21 für ein Parkhaus 1 eine erste Auswerte- und Steuereinheit 25, einen ersten Speicher 22 zum Speichern von Informationen 20 über das Parkhaus 1 und eine erste Sende-Empfangs-Einheit 24. Optional kann das Belegungszustandserkennungssystem 21 eine gestrichelt dargestellte Belegungszustandssensorik 26 aufweisen, welche mindestens einen Sensor und/oder Kamera zur Ermittlung eines Belegungszustands der einzelnen Parkplätze umfasst. Gemäß einem ersten Aspekt der vorliegenden Erfindung empfängt die erste Auswerte- und Steuereinheit 25 von der im Parkhaus 1 angeordneten Belegungszustandssensorik 26 und/oder über die erste Sende-Empfangs-Einheit 24 von Fahrzeugen 30 Informationen über den Belegungszustand der einzelnen Parkplätze 10 im Parkhaus 1. Die erste Auswerte- und Steuereinheit 25 speichert die Informationen über den Belegungszustand der einzelnen Parkplätze 10 in einer Datenbank mit Geometriedaten des Parkhauses 1, wobei die Auswerte- und Steuereinheit 25 Informationen über den Belegungszustand der einzelnen Parkplätze 10 und die Geometriedaten als Informationen 20 über das Parkhaus 1 bei Bedarf bzw. auf Anforderung über die erste Sende-Empfangs-Einheit 24 an Fahrzeuge 30 mit einem Einparksystem 31 ausgibt oder die Datenbank mit den gespeicherten Informationen über den Belegungszustand der einzelnen Parkplätze 10 aktualisiert, wenn neue Informationen über den Belegungszustand der einzelnen Parkplätze 10 ermittelt und/oder empfangen werden. Wie aus Fig. 1 und 2 weiter ersichtlich ist, umfasst ein Ausführungsbeispiel eines Einparksystems 31 für ein Fahrzeug 30 einen zweiten Speicher 32, eine zweite Sende-Empfangs-Einheit 34, eine zweite Auswerte- und Steuereinheit 35 und eine Abstandssensorik 36, mit welcher die Abmessungen von erkannten Parkplätzen und deren Belegungszustand ermittelt werden können. Hierzu weist die Abstandssensorik 36 beispielsweise Ultraschall- und/oder Radar- und/oder Lidarsensoren auf. Gemäß einem zweiten Aspekt der vorliegenden Erfindung empfängt die Auswerte- und Steuereinheit 35 über die Sende-Empfangs-Einheit 34 bei der Einfahrt und/oder während des Aufenthalts im Parkhaus 1 Informationen 20 über das Parkhaus 1 und speichert die empfangenen Informationen im zweiten Speicher 32. Durch Auswerten der bereitgestellten Informationen 20 über das Parkhaus 1 erzeugt die Auswerte- und Steuereinheit 35 Steuerdaten für das Fahrzeug 30 und gibt diese aus, wobei das Fahrzeug 30 basierend auf den Steuerdaten automatisch durch das Parkhaus 1 bewegt werden kann und wahlweise die Steuerdaten als Navigationshinweise über eine entsprechende optische und/oder akustische und/oder haptische Ausgabeeinheit an den Fahrer ausgegeben werden. Die automatische oder über Navigationshinweise umgesetzte Bewegungsführung des Fahrzeugs 30 ist in Fig. 2 beispielhaft als Richtungspfeil 38 dargestellt.

Durch das erfindungsgemäße Verfahren zur Unterstützung eines Einparkvorgangs in einem Parkhaus 1 unter Verwendung eines Einparksystems 31 in einem Fahrzeug 30 werden, gemäß einem dritten Aspekt der vorliegenden Erfindung, dem Einparksystem 31 bei der Einfahrt und/oder während des Aufenthalts im Parkhaus 1 Informationen 20 über das Parkhaus 1 bereitgestellt, wobei das Einparksystem 31 durch Auswerten der bereitgestellten Informationen 20 über das Parkhaus 1 Steuerdaten für das Fahrzeug 30 erzeugt und ausgibt, wobei das Fahrzeug 30 basierend auf den Steuerdaten automatisch durch das Parkhaus 1 bewegt wird und/oder die Steuerdaten als Navigationshinweise an den Fahrer ausgegeben werden.

In vorteilhafter Weise umfassen die in Fig. 3 dargestellten Informationen 20 über das Parkhaus 1 Geometriedaten des Parkhauses 1 und/oder Informationen über den Belegungszustand der einzelnen Parkplätze 10. Die Geometriedaten des Parkhauses 1 umfassen erfindungsgemäß Positionsinformationen und/oder Abmessungsinformationen von Wänden 3 und/oder Sperrflächen 5 und/oder Pfeilern 7 und/oder wahlweise von Parkplätzen 10 und/oder Fahrkorridoren 12 mit Fahrtrichtungen. Die Informationen 20 über den Belegungszustand der einzelnen Parkplätze 10 umfassen eine Belegt-Information 10.1, wenn ein Fahrzeug 9 auf dem korrespondierenden Parkplatz 10 erkannt wird, und/oder eine Frei-Information 10.2, wenn kein Fahrzeug 9 auf dem korrespondierenden Parkplatz 10 erkannt wird, und/oder eine unbekannte Belegungsinformation 10.3, wenn keine sichere Aussage über den Belegungszustand des korrespondierenden Parkplatzes 10 möglich ist.

In Fig. 3 ist die Belegt-Information 10.1 als schraffiertes Rechteck mit durchgezogenem Rand dargestellt. Die Frei-Information 10.2 ist in Fig. 3 als geschlossenes Rechteck dargestellt, und die unbekannte Belegungsinformation 10.3 ist als schraffiertes Rechteck mit gestricheltem Rand dargestellt. Die großen Rechtecke mit dünnem Rand stellen jeweils einen Fahrkorridor 12 dar, welcher Informationen über Position, Breite, Länge, Fahrrichtung umfasst. Die weiteren schraffierten Rechtecke stellen Hindernisse, wie beispielsweise Hauswände 3, Sperrflächen 5, Pfeiler 7, durch Fahrzeuge 9 besetzte Parkplätze 10.1 dar, welche Informationen über Position und Breite bzw. Länge umfassen.

Während der Fahrt durch das Parkhaus 1 erkennt das Einparksystem 31 im Fahrzeug 30 durch Korrelation mit den empfangenen Informationen 20 über das Parkhaus 1 Parkplätze 10 und deren Belegungszustand basierend auf Abstandsdaten, welche durch die Abstandssensorik 36 im Fahrzeug erfasst werden, und speichert den erkannten Belegungszustand der einzelnen Parkplätze 10 im zweiten Speicher 32. Gleichzeitig kann der aktualisierte Belegungszustand von einzelnen Parkplätzen 10 über die Sende-Empfangseinheit 34 an das Belegungszustandserkennungssystem 21 übertragen werden.

Der Belegungszustand der einzelnen Parkplätze 10 wird im ersten Speicher 22 im Belegungszustandserkennungssystem 21 durch Auswerten von Informationen aktualisiert, welche von der im Parkhaus 1 angeordneten Belegungszustandssensorik 26 und/oder von mindestens einem Fahrzeug 30 mit Einparksystem 31 über die Sende-Empfangs-Einheit 24 bzw. Sende-Empfangs-Einheit 34 bereitgestellt werden. Durch eine entsprechende Datenübertragung können somit die sowohl im ersten Speicher 22 als auch im zweiten Speicher 32 gespeicherten Belegungszustände der einzelnen Parkplätze 10 bei Bedarf mit den neu ermittelten Belegungszuständen aktualisiert werden.

Das erfindungsgemäße Einparksystem 31 im Fahrzeug 30 ist in vorteilhafter Weise in der Lage drahtlos Daten vom Belegungszustandserkennungssystems 21 im Parkhaus zu empfangen und an das Belegungszustandserkennungssystem 21 zu senden. Es werden zuerst die Geometrie des Parkhauses und weitere Fahreigenschaften wie Einbahnstraßen, Fahrrichtung, Parkplatzgeometrien, Pfosten usw. an das Einparksystem 31 im Fahrzeug 30 übertragen. Das Fahrzeug 30 kann danach mit der Unterstützung von der Abstandssensorik 36 und der zweiten Auswerte- und Steuereinheit 35 autonom im Parkhaus 1 herumfahren, bzw. kann durch entsprechende Navigationshinweise durch das Parkhaus geleitet werden. Falls das Belegungszustandserkennungssystem 21 im Parkhaus 1 die freien Parkplätze erkennen kann, können auch diese Informationen vom Einparksystem 31 im Fahrzeug 1 eingelesen werden. Falls das Parkhaus die freien Parkplätze nicht ermitteln kann, kann das Einparksystem 1 im Fahrzeug 30 die freien Parkplätze beim Vorbeifahren nach einer Plausibilisierung mit den geometrischen Daten des Parkhauses 1 erkennen und an das Belegungszustandserkennungssystems 21 übertragen. Die Datenbank des Belegungszustandserkennungssystems 21 im Parkhauses wird dadurch aktualisiert. Durch diesen gegenseitigen Austausch werden nur richtige Parkplätze erkannt und es kann schneller eingeparkt werden. Alle nicht relevanten Ecken und Objekte werden nicht bei Parklückenermittlung berücksichtigt. Dadurch ist es möglich alle Parkplätze 10 im Parkhaus 1 zu nutzen.

Das Einparksystem 31 im Fahrzeug 1 findet seine relative Position im Parkhaus 1 beim Vergleichen der Parkhausgeometriedaten mit den erfassten Abtastdaten. Die Informationen 20 über das Parkhaus 1 werden mit den erfassten Abstandsdaten korreliert. Das Ergebnis kann eine direkte automatische Bewegung des Fahrzeuges zum nächsten freien Parkplatz sein. Unterwegs kann das Einparksystem im Fahrzeug 1 die unbekannten Parklücken überprüfen und ggf. als frei oder besetzt bekannt geben.

## Patentansprüche

1. Verfahren zur Unterstützung eines Einparkvorgangs in einem Parkhaus unter Verwendung eines Einparksystems (31) in einem Fahrzeug (30),
wobei dem Einparksystem (31) bei der Einfahrt und/oder während des Aufenthalts im Parkhaus (1) Informationen (20) über das Parkhaus (1) bereitgestellt werden,
wobei das Einparksystem (31) durch Auswerten der bereitgestellten Informationen (20) über das Parkhaus (1) Steuerdaten für das Fahrzeug (30) erzeugt und ausgibt,
**dadurch gekennzeichnet,**
**dass** das Parkhaus (1) eine erste Auswerte- und Steuereinheit (25) umfasst und dem Einparksystem (31) durch die erste Auswerte- und Steuereinheit (25) Informationen (20) über das Parkhaus (1) bereitgestellt werden,
wobei die Informationen (20) über das Parkhaus (1) Geometriedaten des Parkhauses (1) umfassen, die Positionsinformationen und/oder Abmessungsinformationen von Wänden (3) und/oder Sperrflächen (5) und/oder Pfeilern (7) umfassen,
wobei das Fahrzeug (30) basierend auf den Steuerdaten automatisch durch das Parkhaus (1) bewegt wird.

2. Verfahren nach Anspruch 1,
**dadurch gekennzeichnet,**
**dass** die Informationen (20) über das Parkhaus (1) Informationen über den Belegungszustand der einzelnen Parkplätze (10) umfassen.

3. Verfahren nach Anspruch 1 oder 2,
**dadurch gekennzeichnet,**
**dass** die Geometriedaten des Parkhauses (1) Positionsinformationen und/oder Abmessungsinformationen von Parkplätzen (10) und/oder Fahrkorridoren mit Fahrtrichtungen umfassen.

4. Verfahren nach Anspruch 2 oder 3,
**dadurch gekennzeichnet,**
**dass** die Informationen (20) über den Belegungszustand der einzelnen Parkplätze (10) eine Belegt-Information (10.1) und/oder eine Frei-Information (10.2) und/oder eine unbekannte Belegungsinformation (10.3) umfassen.

5. Verfahren nach einem der vorgehenden Ansprüche 1 bis 4,
**dadurch gekennzeichnet,**
**dass** das Einparksystem (31) im Fahrzeug (30) während der Fahrt durch das Parkhaus (1) durch Korrelation erfasster Abstandsdaten mit den empfangenen Informationen (20) über das Parkhaus (1) Parkplätze (10) erkennt und deren Belegungszustand basierend auf den erfassten Abstandsdaten ermittelt und speichert.

6. Verfahren nach einem der vorgehenden Ansprüche 2 bis 5,
**dadurch gekennzeichnet,**
**dass** der Belegungszustand der einzelnen Parkplätze (10) durch Auswerten von Informationen aktualisiert wird, welche von einer im Parkhaus (1) angeordneten Belegungszustandssensorik (26) und/oder von mindestens einem Fahrzeug (30) bereitgestellt werden, welches ein Einparksystem (31) aufweist.

7. Verfahren nach einem der vorgehenden Ansprüche, wobei die Steuerdaten als Navigationshinweise an den Fahrer ausgegeben werden.

8. Einparksystem für ein Fahrzeug mit einer zweiten Auswerte- und Steuereinheit (35) und einer Abstandssensorik (36),
wobei die zweite Auswerte- und Steuereinheit (35) geeignet ist über eine Sende-Empfangs-Einheit (34) bei der Einfahrt und/oder während des Aufenthalts in einem Parkhaus (1) Informationen (20) über das Parkhaus (1) zu empfangen und zu speichern,
wobei die zweite Auswerte- und Steuereinheit (35) geeignet ist durch Auswerten der bereitgestellten Informationen (20) über das Parkhaus (1) Steuerdaten für das Fahrzeug (30) zu erzeugen und auszugeben,
**dadurch gekennzeichnet,**
**dass** die Informationen (20) über das Parkhaus (1) Geometriedaten des Parkhauses (1)umfassen, die Positionsinformationen und/oder Abmessungsinformationen von Wänden (3) und/oder Sperrflächen (5) und/oder Pfeilern (7) umfassen, und wobei das Fahrzeug (30) basierend auf den Steuerdaten automatisch durch das Parkhaus (1) bewegbar ist.

9. Einparksystem nach Anspruch 8,
**dadurch gekennzeichnet,**
**dass** die zweite Auswerte- und Steuereinheit (35) geeignet ist während der Fahrt durch das Parkhaus (1) durch Korrelation erfasster Abstandsdaten, welche durch die Abstandssensorik (36) erfassbar sind, mit den empfangenen Informationen (20) über das Parkhaus (1) Parkplätze (10) zu erkennen und deren Belegungszustand basierend auf den Abstandsdaten zu ermitteln und zu speichern.

10. Einparksystem nach Anspruch 8, **dadurch gekennzeichnet,**
**dass** die zweite Auswerte- und Steuereinheit (35) geeignet ist den gespeicherten Belegungszustand der einzelnen Parkplätze (10) bei Bedarf mit dem ermittelten Belegungszustand zu aktualisieren.

11. Einparksystem nach einem der vorgehenden Ansprüche, das so ausgebildet ist, daß ferner die Steuerdaten als Navigationshinweise an den Fahrer ausgegeben werden.

## Claims

1. Method for assisting with a parking process in a car park using a parking system (31) in a vehicle (30),
the parking system (31) being provided with information (20) relating to the car park (1) upon entry to and/or during the stay in the car park (1),
the parking system (31) generating and outputting control data for the vehicle (30) by evaluating the provided information (20) relating to the car park (1),
**characterized**
**in that** the car park (1) comprises a first evaluation and control unit (25), and the parking system (31) is provided with information (20) relating to the car park (1) by the first evaluation and control unit (25),
the information (20) relating to the car park (1) comprising geometric data relating to the car park (1) which comprise position information and/or dimensional information relating to walls (3) and/or restricted areas (5) and/or pillars (7), the vehicle (30) being automatically moved through the car park (1) on the basis of the control data.

2. Method according to Claim 1,
**characterized**
**in that** the information (20) relating to the car park (1) comprises information relating to the occupancy status of the individual parking spaces (10).

3. Method according to Claim 1 or 2,
**characterized**
**in that** the geometric data relating to the car park (1) comprise position information and/or dimensional information relating to parking spaces (10) and/or driving routes with directions of travel.

4. Method according to Claim 2 or 3,
**characterized**
**in that** the information (20) relating to the occupancy status of the individual parking spaces (10) comprises an item of occupied information (10.1) and/or an item of free information (10.2) and/or an item of unknown occupancy information (10.3).

5. Method according to one of the preceding Claims 1 to 4,
**characterized**
**in that** the parking system (31) in the vehicle (30) identifies parking spaces (10) during travel through the car park (1) by correlating acquired distance data with the received information (20) relating to the car park (1) and determines and stores the occupancy status of said parking spaces on the basis of the acquired distance data.

6. Method according to one of the preceding Claims 2 to 5,
**characterized**
**in that** the occupancy status of the individual parking spaces (10) is updated by evaluating information provided by an occupancy status sensor system (26) arranged in the car park (1) and/or by at least one vehicle (30) which has a parking system (31).

7. Method according to one of the preceding claims, the control data being output to the driver as navigation instructions.

8. Parking system for a vehicle, having a second evaluation and control unit (35) and a distance sensor system (36),
the second evaluation and control unit (35) being suitable for receiving and storing information (20) relating to the car park (1) via a transmitting/receiving unit (34) upon entry to and/or during the stay in a car park (1),
the second evaluation and control unit (35) being suitable for generating and outputting control data for the vehicle (30) by evaluating the provided information (20) relating to the car park (1),
**characterized**
**in that** the information (20) relating to the car park (1) comprises geometric data relating to the car park (1) which comprise position information and/or dimensional information relating to walls (3) and/or restricted areas (5) and/or pillars (7), and the vehicle (30) being able to be automatically moved through the car park (1) on the basis of the control data.

9. Parking system according to Claim 8,
**characterized**
**in that** the second evaluation and control unit (35) is suitable for identifying parking spaces (10) during travel through the car park (1) by correlating acquired distance data, which can be acquired by the distance sensor system (36), with the received information (20) relating to the car park (1) and for determining and storing the occupancy status of said parking spaces on the basis of the distance data.

10. Parking system according to Claim 8,
**characterized**
**in that** the second evaluation and control unit (35) is suitable for updating the stored occupancy status of the individual parking spaces (10) with the determined occupancy status if necessary.

11. Parking system according to one of the preceding claims, which is designed in such a manner that the control data are also output to the driver as navigation instructions.

## Revendications

1. Procédé d'assistance pour une manoeuvre de stationnement dans un parc de stationnement par utilisation d'un système de stationnement (31) dans un véhicule (30),
dans lequel des informations (20) concernant le parc de stationnement (1) sont fournies au système de stationnement (31) lors de l'entrée dans le parc de stationnement (1) et/ou pendant le séjour dans celui-ci,
dans lequel le système de stationnement (31) génère et délivre des données de commande destinées au véhicule (30) par évaluation des informations (20) fournies concernant le parc de stationnement (1),
**caractérisé en ce que** le parc de stationnement (1) comprend une première unité d'évaluation et de commande (25) et **en ce que** des informations (20) concernant le parc de stationnement (1) sont fournies au système de stationnement (31) par la première unité d'évaluation et de commande (25),
dans lequel les informations (20) concernant le parc de stationnement (1) comprennent des données de géométrie du parc de stationnement (1), qui comprennent des informations de position et/ou des informations de dimensions des parois (3) et/ou des surfaces d'arrêt (5) et/ou des piliers (7),
dans lequel le véhicule (30) est déplacé automatiquement à travers le parc de stationnement (1) sur la base des données de commande.

2. Procédé selon la revendication 1,
**caractérisé en ce que** les informations (20) concernant le parc de stationnement (1) comprennent des informations concernant l'état d'occupation des emplacements de stationnement (10) individuels.

3. Procédé selon la revendication 1 ou 2, **caractérisé en ce que** les données de géométrie du parc de stationnement (1) comprennent des informations de position et/ou des informations de dimensions d'emplacements de stationnement (10) et/ou des couloirs de conduite avec des directions de conduite.

4. Procédé selon la revendication 2 ou 3, **caractérisé en ce que** les informations (20) concernant l'état d'occupation des emplacements de stationnement (10) individuels comprennent une information d'état occupé (10.1) et/ou une information d'état libre (10.2) et/ou une information d'état d'occupation inconnu (10.3).

5. Procédé selon l'une quelconque des revendications 1 à 4 précédentes,
**caractérisé en ce que** le système de stationnement (31) dans le véhicule (30) identifie, pendant la conduite à travers le parc de stationnement (1), par corrélation de données de distance détectées avec des informations (20) reçues concernant le parc de stationnement (1), des emplacements de stationnement (10) et détermine et stocke leur état d'occupation sur la base des données de distance détectées.

6. Procédé selon l'une quelconque des revendications 2 à 5,
**caractérisé en ce que** l'état d'occupation des emplacements de stationnement (10) individuels est actualisé par évaluation d'informations qui sont fournies par un système de capteurs d'état d'occupation (26) disposé dans le parc de stationnement (1) et/ou par au moins un véhicule (30) qui comporte un système de stationnement (31).

7. Procédé selon l'une quelconque des revendications précédentes, dans lequel les données de commande sont délivrées au conducteur sous la forme d'instructions de navigation.

8. Système de stationnement destiné à un véhicule comportant au moins une deuxième unité d'évaluation et de commande (35) et un système de capteurs de distance (36),
dans lequel la deuxième unité d'évaluation et de commande (35) est conçue pour recevoir et stocker des informations (20) concernant le parc de stationnement (1) par l'intermédiaire d'une unité d'émission-réception (34) lors de l'entrée dans un parc de stationnement (1) et/ou pendant le séjour dans celui-ci,
dans lequel la deuxième unité d'évaluation et de commande (35) est conçue pour générer et délivrer des données de commande destinées au véhicule (30) par évaluation des informations fournies (20) concernant le parc de stationnement (1),
**caractérisé en ce que** les informations (20) concernant le parc de stationnement (1) comprennent des données de géométrie du parc de stationnement (1), qui comprennent des informations de position et/ou des informations de dimensions des parois (3) et/ou des surfaces d'arrêt (5) et/ou des piliers (7), et dans lequel le véhicule (30) peut être déplacé automatiquement à travers le parc de stationnement (1) sur la base des données de commande.

9. Procédé selon la revendication 8,
**caractérisé en ce que** la deuxième unité d'évaluation et de commande (35) est appropriée pour identifier des emplacements de stationnement (10) pendant la conduite à travers le parc de stationnement (1) par corrélation de données de distance détectées qui peuvent être détectées par l'intermédiaire du système de capteurs de distance (36), avec les informations (20) reçues concernant le parc de stationnement (1), et pour déterminer et stocker leur état d'occupation sur la base des données de distance.

10. Système de stationnement selon la revendication 8,
**caractérisé en ce que** la deuxième unité d'évaluation et de commande (35) est conçue pour actualiser selon les nécessités l'état d'occupation stocké des emplacements de stationnement (10) individuels avec l'état d'occupation déterminé.

11. Système de stationnement selon l'une quelconque des revendications précédentes, conçu pour délivrer en outre les données de commande au conducteur sous la forme d'instructions de navigation.
